# EUROPEAN PATENT APPLICATION

(11) **EP 2 767 945 A1**
(43) Date of publication of application: **20.08.2014**
(21) Application number: 13155567.4
(22) Date of filing: 18.02.2013
(51) Int. Cl.: G06Q 30/02

(54) **Coordinating a development cycle in a cloud**

(71) Applicant: Koninklijke KPN N.V., 2516 CK The Hague (NL)
(72) Inventor: Alberts, Albert, 9711 HT Groningen (NL); van Steenbergen, Ate, 9737 NN Groningen (NL)
(74) Representative: Wuyts, Koenraad Maria

(57) **Abstract**

System (100) for coordinating a development cycle in a cloud computing environment (020), the cloud computing environment comprising computing resources for individually hosting sub-environments (SE1-SE4) of a Development, Testing, Acceptance and Production [DTAP] environment, the system comprising:
- a database (DB) connectable to a network interface (110) for enabling each of the sub-environments to store data in the database and retrieve data from the database;
- a monitoring unit (120) for monitoring the database (DB) to detect a storing of input data in the database by one of the sub-environments;
- the monitoring unit (120) being arranged for accessing event-action pairs, each of the event-action pairs defining a database action to be performed with respect to a specified one of the sub-environments (SE1-SE4) in response a database event; the database event and the database action together constituting a step in a DTAP development cycle; and
- the monitoring unit (120) being further arranged for i) matching the storing of the input data to the database event of one of the event-action pairs, and ii) generating instructions for causing the database action of said event-action pair to be performed with respect to the specified one of the sub-environments (SE1-SE4).

## Description

### FIELD OF THE INVENTION

The invention relates to a system and method for coordinating a development cycle in a cloud computing environment. The invention further relates to a computer program product comprising instructions for causing one or more computing resources in a cloud computing environment to perform the aforementioned method.

The term 'cloud' refers to a combination of computing resources and network infrastructure, with the computing resources being mutually connected to each other via the network infrastructure. Typically, the network infrastructure is at least in part constituted by the Internet. The computing resources may be hardware or software resources.

It has become popular to use the computing resources of such a cloud to deliver services to users via the network infrastructure. For example, Software as a Service (SaaS) may be used to provide users access to application software and databases. In general, such use of the computing resources of a cloud is referred to as cloud computing. A cloud used for cloud computing is also referred to as a cloud computing environment.

### BACKGROUND OF THE INVENTION

It is known to apply a methodology to development of software and other computer-developable products, e.g., to structure, plan and control the development process. An example of such a methodology is the so-termed Development, Testing, Acceptance and Production (DTAP) methodology, in which various phases are defined which are to be followed during the development process. The DTAP methodology is known per se from the field of software development. The transitioning through the various phases of the DTAP methodology during development is also referred to as passing through a DTAP cycle.

It is known to use local workstations to implement the DTAP methodology in a workplace. For example, a developer may use a development workstation to develop the computer-developable product, a testing workstation to test said product, etc. In addition, one or more servers may be used in the implementation of the DTAP methodology. For example, when developing software, a build server may be provided to build a software project. Similarly, a code server may host a source-code repository for the software project.

The combination of hardware and software which implements the DTAP methodology is referred to as a DTAP environment. The DTAP environment is typically comprised of various sub-environments, e.g., a development environment provided by the development workstation, a testing environment provided by the testing workstation, etc.

### SUMMARY OF THE INVENTION

It is desirable to individually host the sub-environments of such a DTAP environment in the cloud. This allows, e.g., selecting a development provider for providing a development sub-environment, a testing provider for providing a testing sub-environment, etc. Disadvantageously, significant manual effort is needed to configure each of the sub-environments so as to together establish the DTAP environment in the cloud.

It would be advantageous to enable establishing a DTAP environment in the cloud in a more automatic manner, i.e., with less human intervention.

To better address this concern, a first aspect of the invention provides a system for coordinating a development cycle in a cloud computing environment, the cloud computing environment comprising computing resources for individually hosting sub-environments of a Development, Testing, Acceptance and Production (DTAP) environment, the system comprising:
- a database connectable to a network interface for enabling each of the sub-environments to store data in the database and retrieve data from the database;
- a monitoring unit for monitoring the database to detect a storing of input data in the database by one of the sub-environments;
- the monitoring unit being arranged for accessing event-action pairs, each of the event-action pairs defining a database action to be performed with respect to a specified one of the sub-environments in response a database event; the database event and the database action together constituting a step in a DTAP development cycle; and
- the monitoring unit being further arranged for i) matching the storing of the input data to the database event of one of the event-action pairs, and ii) generating instructions for causing the database action of said event-action pair to be performed with respect to the specified one of the sub-environments.

A further aspect of the invention provides a method of coordinating a development cycle in a cloud computing environment, the cloud computing environment comprising computing resources for individually hosting sub-environments of a Development, Testing, Acceptance and Production (DTAP) environment, the cloud computing environment further comprising a database connectable to a network interface for enabling each of the sub-environments to store data in the database and retrieve data from the database, the method comprising:
- monitoring the database to detect a storing of input data in the database by one of the sub-environments;
- accessing event-action pairs, each of the event-action pairs defining a database action to be performed with respect to a specified one of the sub-environments in response a database event; the database event and the database action together constituting a step in a DTAP development cycle;
- matching the storing of the input data to the database event of one of the event-action pairs; and
- generating instructions for causing the database action of said event-action pair to be performed with respect to the specified one of the sub-environments.

A further aspect of the invention provides a computer program product comprising instructions for causing one or more computing resources in a cloud computing environment to perform the method as set forth.

The above measures provide a system, method and computer program product which each coordinate a development cycle in a cloud computing environment, and in particular, a development cycle performed using cloud-hosted sub-environments of a DTAP environment. At least two sub-environments of such a DTAP environment are individually hosted on computing resources of the cloud computing environment, e.g., on separate physical or virtual servers. For enabling said coordination, a database and a monitoring unit are provided. The database is connectable to a network interface, thereby enabling the database to communicate with each of the sub-environments in the cloud computing environment. The monitoring unit is communicatively arranged with the database, thereby enabling monitoring the database for a storing of input data by one of the sub-environments.

The monitoring unit has access to data representing event-action pairs. Each of the event-action pairs defines an action involving the database and a specified one of the sub-environments. Each event-action pair thus specifies, or at least is indicative of, the specified one of the sub-environments. The event-action pair defines the action with respect to an event, in that the action is to be performed in response to the event. The event involves the database, i.e., is an event which occurs in the database. Together, the event and the action represent a step in a DTAP development cycle, e.g., from one phase of the DTAP development cycle to another. As such, the event typically relates to an end and/or output of one phase of the DTAP development cycle, and the action to a start and/or input of another phase of the DTAP development cycle. Here, the phase may be each of the development phase, testing phase, acceptance phase and production phase, or a sub-phase thereof.

The monitoring unit is further arranged for matching the storing of the input data to the database event of one of the event-action pairs. Essentially, the monitoring unit determines which database event the storing of the input data represents, and which database action is associated with said database event. Moreover, the monitoring unit is arranged for generating instructions which cause the database action of said event-action pair to be executed while involving the specified one of the sub-environments. The involvement may be that, e.g., the result of the database action is provided to said sub-environment, the database action is executed by the sub-environment on the database, etc.

The above measures have the effect that a system, method and computer program product are provided which coordinate a DTAP development cycle between individually cloud-hosted sub-environments of a DTAP environment, thereby effectively establishing the DTAP environment or at least a part thereof in the cloud. The above measures provide a convenient setup of such a DTAP environment, since it is based on the cloud-hosting of individual sub-environments which are by themselves relatively self-contained and thus convenient to cloud-host. The coordination between the individual sub-environments is provided the database and the monitoring unit. The database enables the sub-environments to store and retrieve data and thus enables an exchange of data via the database, e.g., via the storing of data by a first sub-environment and the retrieving of the data by a second sub-environment. Furthermore, upon storing of input data, the monitoring unit determines whether said storing of the input data constitutes an event which is associated with a transitional step in a DTAP development cycle. If so, instructions are generated which cause an action to be executed which is also associated with said transitional step in the DTAP development cycle. The action involves a specified one of the sub-environments. By suitably defining the event-action pairs, the coordination between the sub-environments can thus be effected. Consequently, each of the sub-environments needs less manual configuration effort. In particular, the sub-environments do not have to be configured to communicate directly with each other but rather only to communicate with the database.

It is therefore avoided that the sub-environments have to be jointly cloud-hosted, e.g., in the form of a single environment. Rather, different vendors or service provides may be employed to individually host the various sub-environments. This provides advantages such as more flexibility since for each of the sub-environments separately, a vendor or service provider may be individually chosen. For example, a DTAP environment may be established from existing cloud-hosted sub-environments which have not together been used to form a DTAP environment. Another advantage may be that different availability requirements may be applied when individually cloud-hosting sub-environments. For example, a testing sub-environment may need only a medium degree of availability, whereas a production sub-environment may need a high degree of availability. The possibility to exploit such different availability requirements typically provides a cost reduction.

In an embodiment, the database comprises user management data for enabling each of the sub-environments to determine a user right of a user for the respective sub-environment by accessing the user management data in the database. Each of the sub-environments is typically involved in user management, e.g., to manage user access and user roles in each of the sub-environments for one or more users. By providing user management data in the database which is accessible to each of the sub-environments, said user management is centralized. As such, the user management data may centrally define the user rights for each user with respect to one or more of the sub-environments. Moreover, by providing the user management data in the database, the system may automatically adapt a user right to the phase of the DTAP development cycle, e.g., by changing a role of a user. Hence, it may not be needed for each of the sub-environments to separately establish user management data, i.e., a duplication of performing the user management may be avoided.

In an embodiment, the user management data comprises user authorization data for enabling each of the sub-environments to authorize the user by verifying a credential of the user in the database. Each of the sub-environments is typically involved in user authorization, e.g., to determine whether a user providing a user identifier is genuinely the user. An example is the user entering the user identifier and a password and the sub-environment verifying if the password is validly associated with the user identifier. By providing user authorization data on the database which is accessible to each of the sub-environments, said user authorization is centralized. Hence, it may not be needed for each of the sub-environments to separately establish user authorization data.

In a further embodiment, the database comprises DTAP workflow data, and the monitoring unit is arranged for determining the event-action pairs from the DTAP workflow data. DTAP workflow data is typically at least indicative of said event-action pairs since it describes phases of a DTAP development cycle and their transitions. The monitoring unit is arranged to determine said event-action pairs from the DTAP workflow data stored in the database, e.g., by analyzing the DTAP workflow data. This provides a convenient way of configuring the system, as it is not needed to separately manually define the event-action pairs for the system. Rather, DTAP workflow data, which typically already exists for other purposes, may be re-used to provide the event-action pairs to the system.

In an embodiment, the database is arranged for further functioning as a reporting database for enabling a user to establish a report in the database from each of the sub-environments. The establishing of a report during a DTAP development cycle is typically associated with a transitional step in a DTAP development cycle. A reason for this is that such reports are typically established after completion of a DTAP development cycle phase. Since the monitoring unit monitors the database for the storing of input data such as a report, the monitoring unit may make use of the storing of the report to better coordinate the DTAP development cycle. In particular, the monitoring unit may cause a database action to be performed based on the establishing of a report in the database, i.e., by matching said storing of the report to an event-action pair, and by generating instructions for causing the database action to be performed with respect to the specified one of the sub-environments.

In an embodiment, the database is arranged for automatically triggering the monitoring unit in response the storing of the input data. The database thus actively triggers the monitoring unit when the input data is stored in the database. The monitoring unit thus does not need to poll or otherwise consult the database in order to detect said storing. This has the advantage that the monitoring unit needs to be less complex. A further advantage may be that the system may be obtained by coupling a so-termed active or triggered database, which is known per se from the field of databases, to the monitoring unit as claimed. For example, a so-termed Microsoft SQL server-based database may be used.

In a further embodiment, the monitoring unit is arranged for detecting the storing of the input database by polling the database. This has the advantage that a so-termed passive database may be used, i.e., it is not needed to provide an active or triggered database.

In a further embodiment, the monitoring unit is arranged for generating the instructions for causing i) the database to perform the database action with the specified one of the sub-environments as recipient, or ii) the specified one of the sub-environments to perform the database action on the database. As such, either the database itself or the sub-environment performs the database action. Both options are well suited for causing the database action of said event-action pair to be performed with respect to the specified one of the sub-environments. For example, the database may send data to the sub-environment. Alternatively, the sub-environment may retrieve the data from the database.

In a further embodiment, the database action comprises a sending of the input data to the specified one of the sub-environments. During a DTAP development cycle, the sending of data is a frequently occurring action. By defining an event-action pair which causes the sending of the input to the specified one of the sub-environments, the system may be used to automatically forward the input data stored by a first sub-environment to a second sub-environment. As such, no direct data transfer between said sub-environments is needed.

In a further embodiment, the input data comprises at least one of: a source code, an object file, a build script, an executable file, and a report. Such types of data are frequently used during a DTAP development cycle. In particular, such types of data typically constitute output of a first sub-environment and input for a second sub-environment.

In a further embodiment, the cloud computing environment further comprises a build server, and the monitoring unit is arranged for accessing at least one further event-action pair, said event-action pair defining a build action to be performed on the build server in response to a database event. Build servers are frequently used during a DTAP development cycle. By causing build actions to be performed on the build server in response to a database event, the system may be used to, upon storing of input data in the form of source code, automatically cause the build-server to compile the source code. As such, it may not be needed for each of the sub-environments to directly communicate with the build server. In particular, a further event-action pair may be used to automatically forward a result of the build action, e.g., an executable or an application, to a further sub-environment.

In a further embodiment, the monitoring unit is arranged for notifying a user of the storing of the input data. The storing of input data constitutes, or is associated with, a database event which in turn is associated with a step in the DTAP development cycle. By notifying the user of said storing of the input data, the user is thus automatically notified of progress in the DTAP development cycle. For example, the user may be notified by e-mail.

In an embodiment, the sub-environments of the DTAP environment comprise at least two of the group of: a development sub-environment, a testing sub-environment, an acceptance sub-environment and a production sub-environment.

It will be appreciated by those skilled in the art that two or more of the above-mentioned embodiments, implementations, and/or aspects of the invention may be combined in any way deemed useful.

Modifications and variations of the method and/or the computer program product, which correspond to the described modifications and variations of the system, can be carried out by a person skilled in the art on the basis of the present description.

The invention is defined in the independent claims. Advantageous yet optional embodiments are defined in the dependent claims.

### BRIEF DESCRIPTION OF THE DRAWINGS

These and other aspects of the invention are apparent from and will be elucidated with reference to the embodiments described hereinafter. In the drawings,
Fig. 1 shows a system for coordinating a development cycle in a cloud computing environment, the system comprising a database and a monitoring unit;
Fig. 2 shows a system for coordinating a development cycle in a cloud computing environment in which the monitoring unit is comprised in a sub-environment;
Fig. 3 shows an example of a content of the database;
Fig. 4 shows a method of coordinating a development cycle in a cloud computing environment using a network connectable database;
Fig. 5 shows a computer program product for performing the method; and
Fig. 6 shows an example of an operation of the system and/or method.

It should be noted that items which have the same reference numbers in different Figures, have the same structural features and the same functions, or are the same signals. Where the function and/or structure of such an item has been explained, there is no necessity for repeated explanation thereof in the detailed description

### DETAILED DESCRIPTION OF EMBODIMENTS

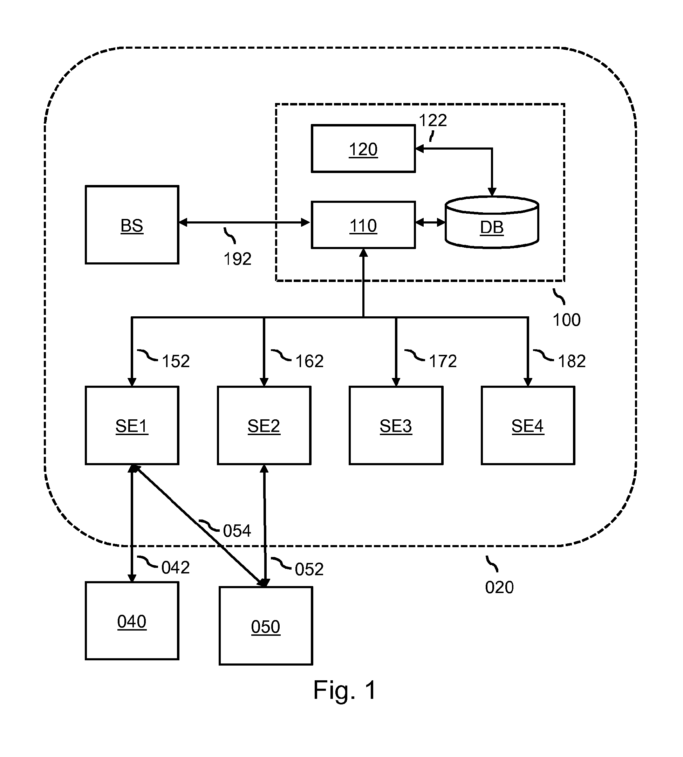

Fig. 1 shows a system 100 for coordinating a development cycle in a cloud computing environment 020. The cloud computing environment 020 is shown schematically in Fig. 1 as a dashed outline. The cloud computing environment 020 comprises computing resources for individually hosting sub-environments SE1-SE4 of a Development, Testing, Acceptance and Production (DTAP) environment. For clarity reasons, Fig. 1 directly shows the sub-environments SE1-SE4 without showing the computing resources hosting said sub-environments SE1-SE4. It will be appreciated, though, that each of the sub-environments may be hosted in various ways, e.g., on one or more physical or virtual servers.

In the example of Fig. 1 and further, the first sub-environment SE1 is a development sub-environment, the second sub-environment SE2 is a testing sub-environment, the third sub-environment SE3 is an acceptance sub-environment, and the fourth sub-environment SE4 is a production sub-environment. It is noted, however, that the sub-environments of the DTAP environment may also be differently divided. For example, the development and testing may be performed on a same sub-environment. Another example is that there may be a number of different development sub-environments. In general, however, the cloud computing environment 020 comprises at least two sub-environments of the aforementioned types, together constituting at least part of a DTAP environment.

The system 100 is shown to comprise a database DB and a network interface 110. The database DB is shown to be connected to the network interface 110 for enabling each of the sub-environments SE1-SE4 to store data in the database DB and retrieve data from the database. For that purpose, data exchange 152-182 may take place via the network interface 110 between each of the sub-environments SE1-SE4 and the database DB.

The system 100 is further shown to comprise a monitoring unit 120 for monitoring the database DB to detect a storing of input data in the database DB by one of the sub-environments SE1-SE4. In the example of Fig. 1, the database DB and the monitoring unit 120 are shown to be local components of the system 100. As such, the monitoring unit 120 is shown to communicate locally with the database DB, i.e., without using the network interface 110. Although not shown in Fig. 1, the database DB may also comprise the monitoring unit 120, in which case their communication is performed internally.

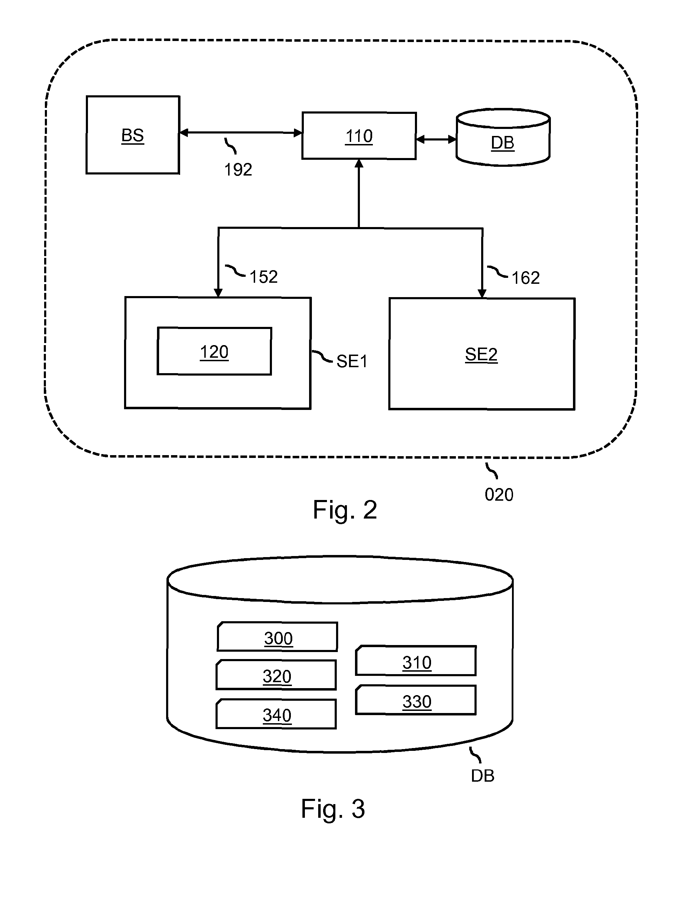

Fig. 1 further shows a first workstation 040 which is connected 042 to the development sub-environment SE1. A developer may use the workstation 040 to log onto the development sub-environment SE1. For that purpose, desktop virtualization techniques may be used, enabling the user to log onto the development sub-environment SE1 by establishing a desktop session with the computing resource(s) hosting the sub-environment. Such techniques are known per se from the fields of desktop virtualization and Virtual Desktop Infrastructure (VDI). Fig. 1 further shows a second workstation 050. A developer-tester may use the workstation 050 to log onto 052, 054 the development sub-environment SE1 or the testing sub-environment SE2. Here, the term developer-tester refers to a user who may be assigned with the role of developer and/or tester. The role assigned may depend on a phase of the DTAP development cycle. The system 100 may automatically assign said role, as will be further explained in reference to the description of the user management data 310 in Fig. 3

The monitoring unit 120 is arranged for accessing event-action pairs. Each of the event-action pairs defines a database action to be performed with respect to a specified one of the sub-environments SE1-SE4 in response a database event. The database event and the database action together constitute a step in a DTAP development cycle. The event-action pairs may be locally stored in the monitoring unit 120. As such, the monitoring unit 120 may locally access the event-action pairs. Alternatively, the event-action pairs may be stored in the database DB or in another location accessible to the monitoring unit 120.

An operation of the system 100 may be briefly explained as follows. One of the sub-environments SE1-SE4 stores input data in the database DB. The monitoring unit 120 detects said storing of the input data in the database DB and matches the storing of the input data to the database event of one of the event-action pairs. Accordingly, the monitoring unit 120 determines which event-action pair is associated with said storing of the input data. The monitoring unit then generates instructions for causing the database action of said event-action pair to be performed with respect to a specified one of the sub-environments SE1-SE4.

The instructions may be for instructing the database DB to perform the database action with the specified one of the sub-environments SE1-SE4 as recipient. For example, in case the database action comprises a sending of the input data to the specified one of the sub-environments SE1-SE4, the instructions may cause the database DB to send the input data to said sub-environment, thereby effectively forwarding the input data. Alternatively or additionally, the instructions may be for instructing the specified one of the sub-environments SE1-SE4 to perform the database action on the database DB. For example, the instructions may cause the specified one of the sub-environments SE1-SE4 to retrieve the input data from the database DB. It is noted that various other database actions are conceivable besides the sending of data. For example, the database action may cause the specified one of the sub-environments SE1-SE4 to be notified, e.g., of the storing of the input data. Another example is that the database action may cause the sending of other data than the input data, e.g., as specified by the event-action pair. Another example is that the database action may cause other actions to be performed in addition to the sending of the input data, e.g., further instructing the sub-environment SE1-SE4 how to process the input data.

It is noted that the monitoring unit 120 may detect the storing of the input data in the database DB in various ways. For example, the database DB may be an active database DB which is arranged for automatically triggering the monitoring unit 120 in response the storing of the input data. It may therefore not be needed for the monitoring unit 120 to poll the database DB. Such an active database DB may also comprise the monitoring unit 120. A possible implementation may be a SQL database in which the event-action pairs are provided in the form of so-termed trigger rules. Other implementations are equally conceivable.

Fig. 1 further shows the cloud computing environment 020 comprising a build server BS. Build servers are commonly known from and used in the field of software development. The monitoring unit 120 may be arranged for accessing at least one further event-action pair, said event-action pair defining a build action to be performed on the build server BS in response to a database event. The monitoring unit 120 may then cause the build server BS to perform the build action by instructing the build server accordingly, e.g., via a data exchange 192. Additionally, the monitoring unit 120 may cause source code to be sent to the build server BS. As such, the monitoring unit 120 may centrally coordinate the build actions to be performed on the build server BS, i.e., without a need for each of the sub-environments to individually communicate with the build server BS.

Fig. 2 shows another embodiment of a system for coordinating a development cycle in a cloud computing environment. Here, the system is distributed, in that the monitoring unit 120 is comprised in one of the sub-environments SE1-SE2. By way of example, in Fig. 2, the monitoring unit 120 is comprised in the development sub-environment SE1. In this further embodiment, the monitoring unit 120 may be arranged for detecting the storing of the input database by polling the database DB. It may therefore not be needed for the database DB to automatically trigger the monitoring unit 120 in response the storing of the input data. Rather, the database DB may be a passive database. Alternatively, the database DB may still be arranged for automatically triggering the monitoring unit 120.

Fig. 3 shows an example of a content of the database DB, in that the database DB is shown to comprise source code 300, user management data 310, DTAP process data 320, DTAP workflow data 330 and an executable 340. The source code 300 may comprise or be accompanied by a developer indicator, a project indicator or a version indicator. The user management data 310 may comprise various data needed for centralizing user management amongst the sub-environments SE1-SE4. For example, the user management data 310 may comprise user authorization data for enabling each of the sub-environments SE1-SE4 to authorize a user by verifying a credential of the user in the database DB. Additionally or alternatively, the user management data 310 may comprise or be indicative of roles of one or more users, thereby enabling centralized role management. It is noted that by being centrally provided, i.e., comprised in the database DB, the system 100 may automatically adapt the user management to a phase of the DTAP development cycle. For example, the developer-tester using the second workstation 050 as shown in Fig. 1 may automatically be assigned the role of tester when the DTAP development cycle transitions to a testing phase. For that purpose, the monitoring unit 120 may make use of one or more event-trigger pairs which cause the monitoring unit 120 or the database DB to modify the user management data 310.

The DTAP process data 320 may comprise or be indicative of a process status. The DTAP workflow data 330 may comprise or be indicative of a status, a start-system and an end-system. Although not shown in Fig. 3, the database DB may also comprise an object file, a build script and/or a report. Selected content of the database DB may be pre-stored. For example, the user management data 310, the DTAP process data 320 and/or the DTAP workflow data 330 may be pre-stored on the database DB before commencing a DTAP development cycle. Other selected content may be stored during the DTAP development cycle, e.g., by each of the sub-environments SE1-SE4. For example, source code 300 as developed on the development sub-environment SE1 may be stored in the database DB by said sub-environment after a development phase of the DTAP development cycle is completed. Similarly, an executable 340 may be stored in the database DB by the build server BS after a build action is performed by the build server BS.

It is noted that the monitoring unit 120 may be arranged for determining the event-action pairs from the DTAP workflow data 330. The DTAP workflow data 330 may thus be pre-stored on the database DB for use by at least the monitoring unit 120.

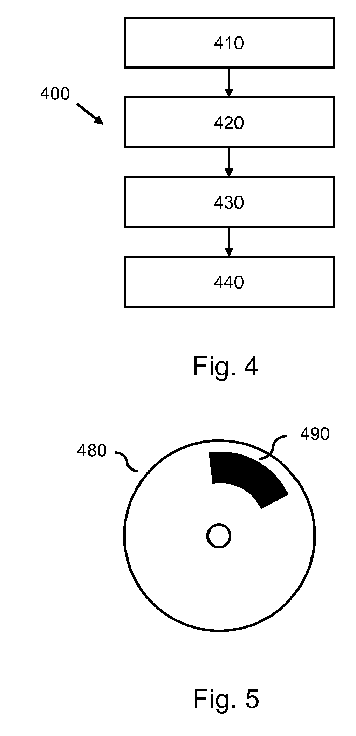

Fig. 4 shows a method 400 of coordinating a development cycle in a cloud computing environment. As aforementioned, the cloud computing environment comprises computing resources for individually hosting sub-environments of a Development, Testing, Acceptance and Production (DTAP) environment. The cloud computing environment further comprises a database connectable to a network interface for enabling each of the sub-environments to store data in the database and retrieve data from the database.

The method 400 comprises, in a first step titled "MONITORING THE DATABASE", monitoring 410 the database to detect a storing of input data in the database by one of the sub-environments. The method 400 further comprises, in a second step titled "ACCESSING EVENT-ACTION PAIRS", accessing 420 event-action pairs, each of the event-action pairs defining a database action to be performed with respect to a specified one of the sub-environments in response a database event, the database event and the database action together constituting a step in a DTAP development cycle. The method 400 further comprises, in a third step titled "ESTABLISHING DATABASE EVENT", matching 430 the storing of the input data to the database event of one of the event-action pairs. The method 400 comprises, in a fourth step titled "PERFORMING DATABASE ACTION", generating 440 instructions for causing the database action of said event-action pair to be performed with respect to the specified one of the sub-environments.

The method 400 may correspond to an operation of the system 100, and in particular to an operation of the monitoring unit 120. The method 400 may be performed using a database DB as described in reference to Figs. 1 and 2. However, the method 400 may also be performed in separation of the system 100 and/or the database DB.

Fig. 5 shows a computer program product 490 comprising instructions for causing a processor system to perform the aforementioned method 400. The computer program product 490 may be comprised on a computer readable medium 480, for example in the form of as a series of machine readable physical marks and/or as a series of elements having different electrical, e.g., magnetic, or optical properties or values.

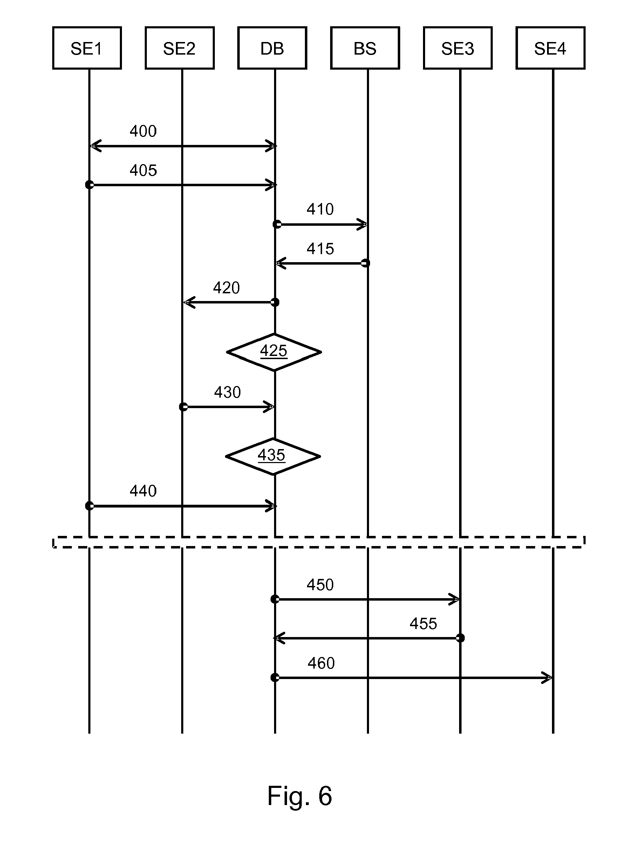

Fig. 6 shows an example of the operation of the system 100 and/or the method 400. Here, a data exchange is shown between, on the one hand, the database DB, and on the other hand, each of the sub-environments SE1-SE4 and the build server BS during a DTAP development cycle. The vertical axis in Fig. 6 corresponds to time. It is further noted that in Fig. 6 each arrow represents data exchange between two elements, with a source element being indicated by a dot and the target element being indicated by an arrow head.

A DTAP development cycle may commence by a developer logging on to the development sub-environment SE1, e.g., using the workstation 040 and a virtual desktop infrastructure. The development sub-environment SE1 may then verify credentials of the developer by accessing user authorization data on the database DB. For that purpose, a data exchange titled "VERIFYING CREDENTIALS" 400 may take place between the development sub-environment SE1 and the database DB. After logging on to the development sub-environment SE1, the developer may generate source code. After completion, the development sub-environment SE1 may then store the source code in the database DB in a data exchanged titled "STORING SOURCE CODE" 405. The monitoring unit 120 may detect the storing of the source code and determine an event-action pair associated with said storing. Having determined the event-action pair, the monitoring unit 120 may generate instructions for causing the source code to be sent to the build server BS in a data exchange titled "SENDING SOURCE CODE" 410. On the build server BS, a building process may be started to compile the source code, thereby obtaining an executable. The build server BS may then store the executable in the database DB in a data exchange titled "STORING EXECUTABLE" 415. The monitoring unit 120 may detect the storing of the executable and, by way of the monitoring unit 120 generating appropriate instructions, cause the executable to be sent to the testing sub-environment SE2 in a data exchange titled "SENDING EXECUTABLE" 420. Moreover, the sending of the executable may cause the executable to be installed in the testing sub-environment SE2. Fig. 6 further shows a tester being notified by means of a first notification 425 that the executable is ready for being tested. For that purpose, the database DB may be arranged for automatically sending an e-mail to the tester after sending the executable to the build server BS. In response, the tester may test the executable and may determine a problem. The tester may report the problem via the testing sub-environment SE2. For that purpose, the database DB may further functions as a reporting database, thereby enabling the user to establish a report in the database DB from the testing sub-environment SE2. It is noted that the term report refers to a result of the reporting, which may be an extensive report but may equally be a brief report, otherwise also referred to as report item. The establishing of the report in the database DB may, by way of the monitoring unit 120 generating appropriate instructions, cause the developer to be notified by means of a second notification 435 that a problem has occurred during testing.

In response, the developer may again log onto the development sub-environment SE1 and adapt the source code in order to prevent the problem from occurring. Alternatively, the monitoring unit 120 may automatically add the role of developer to the tester in the user management data 310 so as to allow the former tester to log onto the development sub-environment SE1. After adapting the source code, the development sub-environment SE1 may then send the adapted source code to the database DB in a data exchanged titled "STORING SOURCE CODE" 440. It will be appreciated that the above phases of development and testing may be repeated one or several more times during a DTAP development cycle, as indicated in Fig. 6 by horizontal dashed parallel lines.

When the tester finally approves the executable, the tester may establish a report in the database DB. This may, by way of the monitoring unit 120 generating appropriate instructions, cause the executable to be sent from the database DB to the acceptance sub-environment SE3 in a data exchange titled "SENDING EXECUTABLE" 450. Although not shown in Fig. 6, this may also cause a product owner to be notified. The product owner may then test the executable using the acceptance sub-environment SE3 and approve the executable by establishing a report in the database via a data exchange titled "ACCEPTING EXECUTABLE" 455. This may, again by way of the monitoring unit 120 generating appropriate instructions, cause the executable to be sent from the database DB to the production sub-environment SE4 in a data exchange titled "SENDING EXECUTABLE" 460. Finally, the executable may be installed in the production sub-environment SE4 or further distributed from thereon, e.g., to an online Application Store.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. System (100) for coordinating a development cycle in a cloud computing environment (020), the cloud computing environment comprising computing resources for individually hosting sub-environments (SE1-SE4) of a Development, Testing, Acceptance and Production [DTAP] environment, the system comprising:
- a database (DB) connectable to a network interface (110) for enabling each of the sub-environments to store data in the database and retrieve data from the database;
- a monitoring unit (120) for monitoring the database (DB) to detect a storing of input data in the database by one of the sub-environments;
- the monitoring unit (120) being arranged for accessing event-action pairs, each of the event-action pairs defining a database action to be performed with respect to a specified one of the sub-environments (SE1-SE4) in response a database event; the database event and the database action together constituting a step in a DTAP development cycle; and
- the monitoring unit (120) being further arranged for i) matching the storing of the input data to the database event of one of the event-action pairs, and ii) generating instructions for causing the database action of said event-action pair to be performed with respect to the specified one of the sub-environments (SE1-SE4).

2. System (100) according to claim 1, wherein the database (DB) comprises user management data (310) for enabling each of the sub-environments (SE1-SE4) to determine a user right of a user for the respective sub-environment by accessing the user management data in the database (DB).

3. System (100) according to claim 2, wherein the user management data (310) comprises user authorization data for enabling each of the sub-environments (SE1-SE4) to authorize the user by verifying a credential of the user in the database (DB).

4. System (100) according to any one of the above claims, wherein the database (DB) comprises DTAP workflow data (330), and wherein the monitoring unit (120) is arranged for determining the event-action pairs from the DTAP workflow data.

5. System (100) according to any one of the above claims, wherein the database (DB) is arranged for further functioning as a reporting database for enabling a user to establish a report in the database from each of the sub-environments (SE1-SE4).

6. System (100) according to any one of the above claims, wherein the database (DB) is arranged for automatically triggering the monitoring unit (120) in response the storing of the input data.

7. System (100) according to any one of the above claims, wherein the monitoring unit (120) is arranged for detecting the storing of the input database by polling the database (DB).

8. System (100) according to any one of the above claims, wherein the monitoring unit (120) is arranged for generating the instructions for causing i) the database (DB) to perform the database action with the specified one of the sub-environments (SE1-SE4) as recipient, or ii) the specified one of the sub-environments (SE1-SE4) to perform the database action on the database (DB).

9. System (100) according to any one of the above claims, wherein the database action comprises a sending of the input data to the specified one of the sub-environments (SE1-SE4).

10. System (100) according to any one of the above claims, wherein the input data comprises at least one of: a source code, an object file, a build script, an executable file, and a report.

11. System (100) according to any one of the above claims, wherein the cloud computing environment (020) further comprises a build server (BS), and wherein the monitoring unit (120) is arranged for accessing at least one further event-action pair, said event-action pair defining a build action to be performed on the build server (BS) in response to a database event.

12. System (100) according to any one of the above claims, wherein the monitoring unit (120) is arranged for notifying a user of the storing of the input data.

13. System (100) according to any one of the above claims, wherein the sub-environments (SE1-SE4) of the DTAP environment comprise at least two of the group of: a development sub-environment (SE1), a testing sub-environment (SE2), an acceptance sub-environment (SE3) and a production sub-environment (SE4).

14. Method (400) of coordinating a development cycle in a cloud computing environment, the cloud computing environment comprising computing resources for individually hosting sub-environments of a Development, Testing, Acceptance and Production (DTAP) environment, the cloud computing environment further comprising a database connectable to a network interface for enabling each of the sub-environments to store data in the database and retrieve data from the database, the method comprising:
- monitoring (410) the database to detect a storing of input data in the database by one of the sub-environments;
- accessing (420) event-action pairs, each of the event-action pairs defining a database action to be performed with respect to a specified one of the sub-environments in response a database event; the database event and the database action together constituting a step in a DTAP development cycle;
- matching (430) the storing of the input data to the database event of one of the event-action pairs; and
- generating (440) instructions for causing the database action of said event-action pair to be performed with respect to the specified one of the sub-environments.

15. Computer program product (490) comprising instructions for causing one or more computing resources in a cloud computing environment to perform the method according to claim 14.
